# EUROPEAN PATENT APPLICATION

(11) **EP 1 063 638 A1**
(43) Date of publication of application: **27.12.2000**
(21) Application number: 00113294.3
(22) Date of filing: 21.06.2000
(51) Int. Cl.: G11B 5/70, G11B 5/706, G11B 5/73

(54) **Magnetic recording medium**

(30) Priority: 22.06.1999 JP 17477899; 08.06.2000 JP 2000171709
(71) Applicant: TDK Corporation, Tokyo 103-8272 (JP)
(72) Inventor: Sasaki, Hideki, c/o TDK Corporation, Tokyo, 103-8272 (JP); Uchida, Masatoshi, c/o TDK Corporation, Tokyo, 103-8272 (JP)
(74) Representative: Schwan, Ivo, Dipl.-Ing. (FH)

(57) **Abstract**

A magnetic recording medium for use with an MR head for the reproduction of recorded signals, the medium having a magnetic layer formed of at least a ferromagnetic powder and a binder supported on a non-magnetic substrate, characterized in that the magnetic layer is from 0.02 to 0.08 µm thick, and that the product of t and Br, where Br is the residual magnetic flux density (in T) and t is the thickness (in µm) of the layer, is in the range of 50 x 10⁻⁴ to 160 x 10⁻⁴ and the coercive force of the layer is no less than 166 kA/m (2100 Oe). The magnetic layer has a centerline average roughness Ra of 3 to 7 nm. The ferromagnetic powder is a ferromagnetic metal powder. The residual magnetic flux density Br of the magnetic layer is between 1000 x 10⁻⁴ and 5000 x 10⁻⁴ T.

## Description

### BACKGROUND OF THE INVENTION

### [Field of the invention]

This invention relates to a magnetic recording medium and more particularly to a coated magnetic recording medium adapted for use with a magnetoresistive head (hereinafter referred to as an "MR head").

### [Prior art]

The tendency toward higher density recording with magnetic recording medium has brought the attention of the art to a magnetic recording system that combines an MR head with a magnetic tape. For example, Japanese Patent Application Kokai No. 10-312525 discloses a magnetic recording medium claimed to show great economy, low noise, and outstandingly high density characteristics. The medium uses either a magnetic layer composed of a hexagonal ferrite powder dispersed in a resin and having a saturation magnetic flux density ranging from 300 to 1000 G (from 0.03 to 0.1 T) and a coercive force of at least 2000 Oe (158 kA/m) or a magnetic layer composed of a ferro-magnetic metal powder dispersed in a resin and having a saturation magnetic flux density from 800 to 1500 G (from 0.08 to 0.15 T) and a coercive force of 2000 Oe (158 kA/m) or more.

Japanese Patent Application Kokai No. 10-302243 teaches that a magnetic recording medium with improved durability and noise characteristic suited for reproduction by means of an MR head can be obtained by restricting the magnetization inversion volume as well as the height of tiny projections on the surface of the magnetic layer and by allowing the magnetic layer to have a coercive force of no less than 2000 Oe (158 kA/m).

Further, Japanese Patent Application Kokai No. 10-134306 introduces another magnetic recording medium for use with an MR head. Its magnetic layer is formed by evaporating a ferro-magnetic metal film of no more than 0.1 µm thick onto the surface of a nonmagnetic substrate in such manner that the layer has a product of t and Br, where Br is the residual magnetic flux density (in T) and t is the thickness (in µm) of the layer, in the range of 70 x 10⁻⁴ to 190 x 10⁻⁴ and a coercive force of 1500 to 1800 Oe (120 to 143 kA/m).

However, the prior art has not presented a medium of adequate sensitivity yet. The magnetic recording medium using the ferromagnetic film as taught in the Patent Application Kokai No. 10-134306 requires extra labor and cost for the evaporation process. The magnetic layer does not have sufficient coercive force to preclude the possibility of self-demagnetization during high-density recording. The characteristics of the layer as such are not adequate either.

The present invention has for its object to provide a coated magnetic recording medium suited for high density recording-reproducing systems using an MR head.

### BRIEF SUMMARY OF THE INVENTION

The above object is realized by the invention with a magnetic recording medium for the reproduction of recorded signals by an MR head, the medium having a magnetic layer formed of a non-magnetic substrate and at least a ferromagnetic powder and a binder supported thereon, characterized in that the magnetic layer is from 0.02 to 0.08 µm thick, and that the product of t and Br, where Br is the residual magnetic flux density (in T) and t is the thickness (in µm) of the layer, is in the range of 50 x 10⁻⁴ to 160 x 10⁻⁴ and the coercive force of the layer is no less than 166kA/m (2100 Oe) . The magnetic layer is preferably finished to a centerline average roughness Ra of 3 to 7 nm. The ferromagnetic powder is a ferromagnetic metal powder.

### DETAILED DESCRIPTION OF THE INVENTION

According to the invention, the magnetic recording medium for use with an MR head for reproduction is provided with a magnetic layer comprising a non-magnetic substrate and at least a ferromagnetic powder and a binder supported by the substrate. The magnetic layer is from 0.02 to 0.08 µm thick. The product of t and Br, where Br is the residual magnetic flux density (in T) and t is the thickness (in µm) of the layer, is in the range of 50 x 10⁻⁴ to 160 x 10⁻⁴ and the coercive force of the layer is no less than 166 kA/m (2100 Ge). The magnetic layer thus makes the coated magnetic recording medium excellent for the system using an MR head. If the thickness of the magnetic layer is less than 0.02 µm or if the t x Br is less than 50 x 10⁻⁴, the density of magnetic flux from the magnetic layer is insufficient and the sensitivity is low. Conversely if the thickness of the magnetic layer is greater than 0.08 µm or if the t x Br is more than 160 x 10⁻⁴, the MR head element is magnetically saturated with a consequent decrease in output. Further, under the invention, the centerline average roughness Ra of the magnetic layer is confined within a range of 3 to 7 nm, so that a stable MR head output is obtained.

The residual magnetic flux density Br depends on the thickness of the magnetic layer. According to the invention, Br may range from 1000 x 10⁻⁴ to 5000 x 10⁻⁴, preferably from 1800 to 3000 x 10⁻⁴, whereby favorable electromagnetic conversion characteristics are attained.

Magnetic material for use under the invention is a magnetic metal powder preferably a Fe-based ferromagnetic alloy powder. More preferably, it contains at least one of three alloying elements, Co, Y, and Al. When it contains Co, the amount is between 0.1 and 40 atomic percent, preferably between 15 and 35 atomic percent, on the basis of the Fe amount. In the case of Y, the content is between 1.5 and 12, preferably between 3 and 10 atomic percent. The Al content is likewise between 1.5 and 12, preferably between 3 and 10 atomic percent.

There is no special limitation to the type of binder to be used in the invention. Any of known thermoplastic, thermosetting, and reactive resins and their mixtures may be employed. Useful thermoplastic resins are polymers and copolymers containing as their constituents vinyl chloride, vinyl acetate, vinyl alcohol, maleic acid, acrylic acid, acrylate, vinylidene chloride, acrylonitrile, methacrylic acid, methacrylate, styrene, butadiene, ethylene, vinyl butyral, vinyl acetal, vinyl ether, etc. Polyurethane resins and various elastomeric resins also come under this category.

Among thermosetting resins are phenol resins, epoxy resins, polyurethane hardening resins, urea resins, melamine resins, alkyd resins, acrylic reactive resins, formaldehyde resins, silicone resins, epoxy-polyamide resins, polyester resin-isocyanate prepolymer mixtures, polyester polyol-polyisocyanate mixtures, and polyurethane-polyisocyanate mixtures.

Also usable are conventional resins of electron beam (EB) curing type. This is referred to in Japanese Patent Application Kokai Nos. 6-131651 and 7-021547. Desirable resins of the character are those containing acryl group CH₂ = CHCOO-or methacryl group CH₂ = CHCH₃COO- as unsaturated double bonds in the resin. It is desirable that there are on the average from 1 to 20, more desirably from 2 to 10, (meth)acryl groups in the molecule. These unsaturated double bonds may be introduced into the above-mentioned thermoplastic or thermosetting resins. For example, they are introduced by reacting the hydroxyl group of such a resin with the above acryl group by a known modification method (esterification or urethanization). The use of a hydroxyl-containing resin or a polyurethane acrylate resin that results from the reaction between a hydroxyl-containing compound and a polyisocyanate-containing compound is desirable too.

The resins so far described may be used alone or in combination. Suitable examples are combinations of at least one selected from among vinyl chloride resins, vinyl chloride-vinyl acetate copolymers, vinyl chloride-vinyl acetate-vinyl alcohol copolymers, and vinyl chloride-vinyl acetate-maleic anhydride copolymers, with a polyurethane resin, and further combinations of such a combination and polyisocyanate.

In order to improve the dispersibility, it is advisable to introduce into such a resin, by copolymerization or by addition reaction, a polar group selected from the class consisting of - COOM, -SO₃M, -OSO₃M, -P=O(OM)₂, -O-P=O(OM)₂ (where M is hydrogen atom or an alkali metal base), OH, NR₂, N⁺R₃ (R is hydrocarbon radical), epoxy group, SH, CN, etc.

The non-magnetic substrate to be used in the invention is not particularly limited in type. Any of films known in the art, for example, the films of polyesters such as polyethylene terephthalate and polyethylene naphthenate, polyolefins, cellulose triacetates, polycarbonates, polyamides, polyimides, polyamideimides, polysulfones, polyaramides, aromatic polyamides, and polybenzoxysazoles. There is no limitation to the shape of the substrate; tapes and disks are common.

Any known means may be used as desired in preparing a coating material by dispersing a ferromagnetic powder in a resin binder. During the manufacture of a coating material by the dispersion of a ferromagnetic powder in a resin binder, any of known abrasives, dispersants, lubricants, antistatic agents, etc. may be added. Alternatively, surface pretreatment of the ferromagnetic powder may be done prior to the dispersion of the ferromagnetic powder. Examples of such additives are powders of α-alumina and α-iron oxide (Fe₂O₃), carbon black, fatty acids such as stearic and myristic acids, and stearic esters such as butyl stearate.

The method of applying a magnetic coating material to a non-magnetic substrate to form a magnetic layer of a predetermined thickness thereon may also be one in common use.

It is advisable to sandwich a non-magnetic layer primarily comprising a non-magnetic inorganic powder and a resin binder between the non-magnetic substrate and the magnetic layer so as to improve the physical properties of the thin magnetic layer (including its abrasive, lubricant, and conductive properties).

The non-magnetic inorganic powder for this purpose may be a commercially available one, such as the powder of α-iron oxide, hematite, goethite, α-alumina, carbon black, calcium carbonate, and barium sulfate. The resin binder and lubricant may be the same as those used for the magnetic layer. In particular, an electron beam-curing resin is desirable as a resin binder for the non-magnetic layer. The thickness of the non-magnetic layer ranges from 0.1 to 1.8 µm, preferably from 0.4 to 1.6 µm.

It is not objectionable to provide an undercoat layer of known type between the non-magnetic substrate and the magnetic layer to enhance their adherence to each other. In that case the undercoat layer is from 0.01 to 0.5 µm, preferably from 0.02 to 0.5 µm, thick.

The invention will now be described in more detail in connection with examples thereof.

### EXAMPLE 1

### Coating material for magnetic layer

| | parts by weight |
|---|---|
| Magnetic metal powder (Hc = 182 kA/m, σs = 140 Am²/kg, BET = 50 m²/g, pH = 9.5, mean length = 0.10 µm, Fe/Co/Al/Y = 100/30/5/5 (ratio by weight)) | 100 |
| Vinyl chloride copolymer ("MR110" made by Nippon Zeon Co.)(polymerization degree = 300, polar group = -OSO₃K, 1.5 groups/molecule) | 12 |
| Phosphobetaine-containing polyurethane resin (Mw=40000, polar group=1.5/molecule) | 4 |
| OSO₃Na-containing polyurethane resin (Mn = 25000, polar group concentration = 1 group/molecule) | 2 |
| α-Al₂O3 ("HIT82" made by Sumitomo Chemical Co.) (mean particle diameter = 0.12 µm, BET = 21 m²/g) | 7 |
| Carbon black ( "Sevacarb MT-CI") (made by Columbian Carbon Japan Co.) (mean particle diameter = 350 nm, BET = 7 m²/g, DBP oil absorption = 41 ml/100 g) | 1 |
| Dispersant ("RE610") | 3 |
| Isocetyl stearate | 1 |
| Butyl stearate | 1 |
| MEK | 600 |
| Toluene | 400 |
| Cyclohexanone | 1000 |

The components of the above composition were kneaded and then dispersed by a sand grinder mill to prepare a coating material for the magnetic layer.

### Coating material for undercoat layer

| | |
|---|---|
| Granular α-Al₂O₃ ("FRO-3" made by Sakai Chemical Co.) (mean particle diameter = 30 nm, BET = 45 m²/g) | 55 |
| Carbon black ("MA100B" made by Mitsubishi Chemical Co.)(mean particle diameter = 24 nm, BET = 125 m²/g, DBP oil absorption = 47 ml/100 g) | 30 |
| α-Al₂O₃ ("AKP30" made by Sumitomo Chemical Co.) (mean particle diameter = 0.33 µm, BET = 8 m2/g) | 15 |
| EB-curing vinyl chloride copolymer ("TBO246" made by Toyobo Co.; 30 wt% solution, polymerization degree = 300, polar group = -OSO₃K = 1.5 groups/molecule) | 15 |
| EB-curing polyurethane resin ("TBO242" made by Toyobo Co.; 35 wt% solution, Mn = 25000, polar group = sodium hypophosphite = 1 group/molecule) | 5 |
| Polyfunctional acrylic monomer ("TA505" made by Sanyo Chemical Co.) | 2 |
| Isocetyl stearate | 10 |
| Butyl stearate | 4 |
| MEK | 180 |
| Toluene | 50 |
| Cyclohexanone | 50 |

The components of the above composition were kneaded and then dispersed by a sand grinder mill to form a coating material for undercoating. The material was extruded onto a PET film 62 µm thick with a surface roughness (Ra) of 8 nm. By means of a die nozzle, the material was applied on one side of the base film to form a layer of 1.5 µm thickness (when dry). After drying at 100°C, the coat was irradiated with an electron beam (4.5 Mrad). The opposite side too was formed following the same procedure to provide a roll of two-side undercoated film.

Next, 4 parts by weight of "Coronate L" (made by Nippon Polyurethane Industry Co.) was added to the coating material magnetic layer. The mixture was applied by extrusion to one side of the above roll by means of a die nozzle to a thickness of 0,05 µm (when dry) . The coat was freed from orientation by a non-orienting magnet, dried at 100°C, and calendered at a line pressure of 2450 N/cm and at 90°C to finish the coat on one side of the base. The procedure was repeated to form another coat on the opposite side, and a roll of sheet with magnetic layers formed on both sides was obtained.

Finally the sheet in roll was stamped to give disk blanks. The blanks were thermally set at 70°C for 24 hours to obtain disks. As shown in Tables 1 and 2 the process conditions and material conditions were modified to obtain various disks as Examples 1 to 7 and Comparative Examples 1 to 7.
(1) Centerline surface roughness Ra
   This was measured using TALYSTEP manufactured by Rank Taylor-Hobson Co., under the conditions of: filter = 0.18 to 9 Hz; stylus = 0.1x2.5 µm special stylus; stylus pressure = 2 mg; measurement speed = 0.03 mm/sec; and measurement length = 500 µm.
(2) Magnetic properties
   A vibrating sample magnetometer (manufactured by Toei Kogyo Co.) was used, and the properties were determined at 10 KOe.
(3) Electromagnetic conversion characteristic
   (signal-to-noise ratio, or SN ratio)
   Each test specimen was recorded with magnetic signals using an MIG (Metal In Gap) head with a gap length of 0.15 µm. The recorded signals were reproduced from each specimen by means of an MR head to determine the SN ratio.

**Table 1**

| Example | 1 | 2 | 3 | 4 | 5 | 6 | 7 |
|---|---|---|---|---|---|---|---|
| σs (Am²/kg) | 140 | 140 | 140 | 140 | 110 | 110 | 135 |
| t(µm) | 0.05 | 0.04 | 0.02 | 0.055 | 0.08 | 0.05 | 0.05 |
| Brx10⁴ (T) | 2850 | 2800 | 2820 | 2850 | 1810 | 1800 | 2600 |
| txBrx10⁴ | 143 | 112 | 56 | 159 | 145 | 90 | 130 |
| Ra (µm) | 5.0 | 4.9 | 5.5 | 4.7 | 4.7 | 5.0 | 5.1 |
| Hc (kA/m) | 175 | 178 | 178 | 175 | 179 | 178 | 166 |
| SN (dB) | 27.0 | 29.2 | 22.5 | 23.1 | 24.3 | 27.0 | 22.7 |

**Table 2**

| Comparative Example | 1 | 2 | 3 | 4 | 5 | 6 | 7 |
|---|---|---|---|---|---|---|---|
| σs (Am²/kg) | 140 | 140 | 140 | 140 | 110 | 110 | 135 |
| t(µm) | 0.15 | 0.01 | 0.06 | 0.10 | 0.10 | 0.02 | 0.05 |
| Brx10⁴ (T) | 2870 | 2820 | 2810 | 2830 | 1850 | 1820 | 2300 |
| txBrx10⁴ | 431 | 28 | 169 | 283 | 165 | 36 | 115 |
| Ra (µm) | 5.2 | 7.3 | 5.3 | 5.0 | 5.2 | 5.8 | 5.0 |
| Hc (kA/m) | 176 | 177 | 176 | 176 | 174 | 179 | 146 |
| SN (dB) | 19.5 | 12.1 | 19.5 | 18.0 | 14.6 | 16.5 | 18.0 |

It will be seen from Table 1 that the magnetic recording medium according to the present invention exhibits a favorable SN characteristic when used in combination with an MR head. Moreover, a high performance magnetic recording medium capable of use with an MR head can be advantageously manufactured at relatively low cost compared with conventional products using magnetic metal coating films.

## Claims

1. A magnetic recording medium for use with a magneto-resistive head for the reproduction of recorded signals, the medium having a magnetic layer formed of at least a ferromagnetic powder and a binder supported on a non-magnetic substrate, characterized in that the magnetic layer is from 0.02 to 0.08 µm thick, and that the product of t and Br, where Br is the residual magnetic flux density (in T) and t is the thickness (in µm) of the layer, is in the range of 50 x 10⁻⁴ to 160 x 10⁻⁴ and the coercive force of the layer is no less than 166kA/m (2100 Oe).

2. The magnetic recording medium of claim 1 wherein the magnetic layer has a centerline average roughness Ra of 3 to 7 nm.

3. The magnetic recording medium of claim 1 or 2 wherein the ferromagnetic powder is a ferromagnetic metal powder.

4. The magnetic recording medium of any of claims 1 to 3 wherein the residual magnetic flux density Br of the magnetic layer is between 1000 x 10⁻⁴ and 5000 x 10⁻⁴ T.
